# EUROPEAN PATENT APPLICATION

(11) **EP 4 607 389 A1**
(43) Date of publication of application: **27.08.2025**
(21) Application number: 23879765.8
(22) Date of filing: 16.10.2023
(51) Int. Cl.: G06F 21/60, G06F 21/62, H04L 67/12, H04L 67/63

(54) **INFORMATION PROCESSING SYSTEM ENABLING SECURE CONNECTION RELATED TO AUTOMATIC DRIVING**

(30) Priority: 17.10.2022 JP 2022166554; 17.11.2022 JP 2022184421
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/037454
(87) International publication number: WO 2024/085122

(57) **Abstract**

An information processing system includes a control device that is a central brain mounted on a vehicle and an information processing device that is a security chip. The information processing device includes an acquisition unit that acquires a type of data to be processed by the control device, a determination unit that determines whether the type of the data is mission-critical data or non-mission-critical data, and a setting unit that sets the control device to connect the mission-critical data to a secure private cloud and connect the non-mission-critical data to a public cloud.

## Description

### Technical Field

The present disclosure relates to an information processing system enabling secure connection related to autonomous driving.

### Background Art

Japanese Patent Application Laid-Open (JP-A) No. 2022-035198 describes a vehicle having an autonomous driving function.

### SUMMARY OF INVENTION

### Technical Problem

Current autonomous driving vehicles perform communication, while not being connected to different clouds according to data contents to be communicated.

In autonomous driving, there are data necessary for the autonomous driving itself and data with high urgency (mission-critical data) and other data (non-mission-critical data). In addition, the mission-critical data may include not only data necessary for the autonomous driving of the vehicle itself but also data essential for controlling a terminal, a robot, and the like managed by the vehicle. The non-mission-critical data is, for example, natural conversation recognition, image recognition, information search, information inference, and other acquired information that is not classified as data with high urgency (traffic information, weather information, entertainment information, etc.). In the existing autonomous driving technology, the mission-critical data and the non-mission-critical data are handled at the same security level, and there is a risk that autonomous driving may be halted if an external attack occurs starting from communication unnecessary for the autonomous driving itself.

### Solution to Problem

According to a first embodiment of the disclosure, an information processing system is provided. The information processing system includes a control device that is a central brain mounted on a vehicle, and an information processing device, in which the information processing device includes: an acquisition unit that acquires a type of data to be processed by the control device; a determination unit that determines whether the type of the acquired data is mission-critical data or non-mission-critical data; and a setting unit that sets the control device to connect the mission-critical data to a secure private cloud and connect the non-mission-critical data to a public cloud.

The information processing system according to the first embodiment further includes a plurality of robots, in which the private cloud and the control device, and the robot and the control device are connected by a secure connection method.

According to the first embodiment of the disclosure, an information processing device is provided. The information processing device is an information processing device in an information processing system including a control device that is a central brain mounted on a vehicle and the information processing device, the information processing device including: an acquisition unit that acquires a type of data to be processed by the control device; a determination unit that determines whether the type of the acquired data is mission-critical data or non-mission-critical data; and a setting unit that sets the control device to connect the mission-critical data to a secure private cloud and connect the non-mission-critical data to a public cloud.

According to the first embodiment of the disclosure, a program for causing a computer to function as the above-described information processing device is provided.

According to a second embodiment of the disclosure, an information processing system is provided. The information processing system includes a control device that is a central brain mounted on a vehicle, and an information processing device, in which the information processing device includes: an acquisition unit that acquires data to be processed by the control device; a determination unit that determines whether a type of the acquired data is mission-critical data or non-mission-critical data designated in advance by a user; an identification unit that identifies a degree to which the acquired data is mission-critical by using an identification model trained for identifying a degree to which data is mission-critical, when it is determined that the acquired data is non-mission-critical data in the determination and the acquired data is undefined data that is not defined in the designation; and a setting unit that sets the control device to connect the mission-critical data to a secure private cloud and connect the non-mission-critical data to a public cloud.

In the information processing system according to the second aspect of the disclosure, the setting unit sets the acquired data that is undefined data to be connected to the private cloud as the mission-critical data according to the identified degree.

In the information processing system according to the second aspect of the disclosure, an identification request tag is added to the undefined data, and the identification unit identifies the degree only when the data to which the identification request tag is added is acquired.

In the information processing system according to the second aspect of the disclosure, in the designation, data necessary for autonomous driving of the vehicle and predetermined data with high urgency are defined as types of data to be determined as the mission-critical data, and natural conversation recognition, image recognition, information search, information inference, and other acquisition information that is not classified as the data with high urgency are defined as types of data to be determined as the non-mission-critical data, the data necessary for the autonomous driving of the vehicle includes driving state-related sensor information and traveling environment-related sensor information necessary for the autonomous driving of the vehicle, and the data with high urgency includes incident information that has occurred around the vehicle and a predetermined emergency notification.

The information processing system according to the second aspect of the disclosure further includes: a learning device configured to learn the trained identification model, in which the learning device learns an identification model for identifying a degree to which data is mission-critical by using a machine learning technique with training data as an input, the training data including the mission-critical data and the non-mission-critical data designated by the user, undefined data that are not defined in the non-mission-critical data, and weight labels for the undefined data.

According to the second embodiment of the disclosure, an information processing device is provided. The information processing device is an information processing device in an information processing system including a control device that is a central brain mounted on a vehicle and the information processing device, the information processing device including: an acquisition unit that acquires data to be processed by the control device; a determination unit that determines whether a type of the acquired data is mission-critical data or non-mission-critical data designated in advance by a user; an identification unit that identifies a degree to which the acquired data is mission-critical by using an identification model trained for identifying a degree to which data is mission-critical, when it is determined that the acquired data is non-mission-critical data in the determination and the acquired data is undefined data that is not defined in the designation; and a setting unit that sets the control device to connect the mission-critical data to a secure private cloud and connect the non-mission-critical data to a public cloud.

According to the second embodiment of the disclosure, a program for causing a computer to function as the above-described information processing device is provided.

Note that the above summary does not enumerate all of the necessary features of the disclosure. Further, the invention may also include subcombinations of these feature groups.

### BRIEF DESCRIPTION OF DRAWINGS

Fig. 1 schematically illustrates an example of a functional configuration of an information processing system according to a first embodiment.
Fig. 2 schematically illustrates an example of a network configuration according to the present embodiment.
Fig. 3 schematically illustrates an example of a network configuration in a vehicle according to the present embodiment.
Fig. 4 schematically illustrates a configuration of a robot and a communication environment to which the robot is connected.
Fig. 5 schematically illustrates an example of a processing routine executed by an information processing device according to the first embodiment.
Fig. 6 schematically illustrates an example of a functional configuration of an information processing system according to a second embodiment.
Fig. 7 schematically illustrates an example of a processing routine executed by an information processing device according to the second embodiment.
Fig. 8 schematically illustrates an example of a hardware configuration of a computer that functions as a control device (central brain), an information processing device, or a plurality of robots.

### DESCRIPTION OF EMBODIMENTS

Hereinafter, the disclosure will be described through embodiments of the invention, but the following embodiments do not limit the invention according to the claims. In addition, not all combinations of features described in the embodiments are essential to the solution of the invention.

An information processing system of the present embodiment is a system in which mission-critical data related to autonomous driving at level 6 is connected to a secure private cloud for processing, and which branches data processing into processing of mission-critical data and processing of non-mission-critical data. A virtual private network (VPN) is used as a secure connection method. In the information processing system, an information processing device that is a security chip is installed, and a branch between processing of mission-critical data and processing of non-mission-critical data is set thereon.

Note that "level 6" is an autonomous driving level, and is a level higher than level 5 representing fully autonomous driving. Level 5 represents fully autonomous driving, but it is the same level as human driving, and there is still a probability that an accident or the like will occur. Level 6 represents a level higher than level 5, and is a level at which the probability that an accident will occur is lower than level 5.

### (First Embodiment)

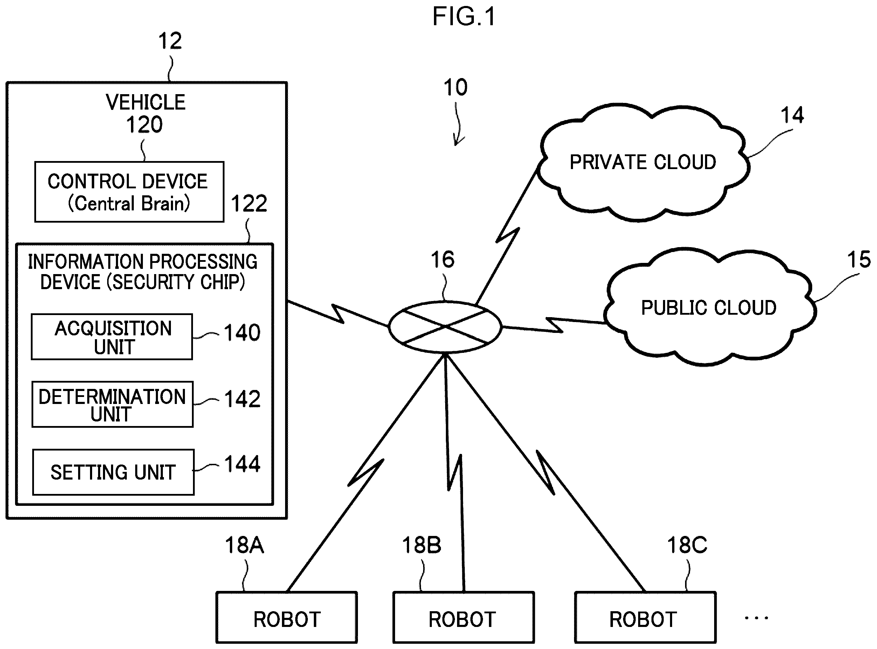

Fig. 1 is a schematic diagram of an example of an information processing system 10 according to a first embodiment. The information processing system 10 includes a control device 120 and an information processing device 122 mounted on a vehicle 12 that is an autonomous driving vehicle, a private cloud 14, a public cloud 15, and a plurality of robots 18A, 18B, and 18C. The components of the information processing system 10 is communicably connected to each other via a communication line 16 such as the Internet. Hereinafter, the robots to which the following description is commonly applied will be referred to as a robot 18. Note that the private cloud 14 and the public cloud 15 may be located either inside or outside the information processing system 10.

The control device 120 is an example of a control device that is a central brain mounted on a vehicle. Hereinafter, the control device 120 will be referred to as a central brain 120.

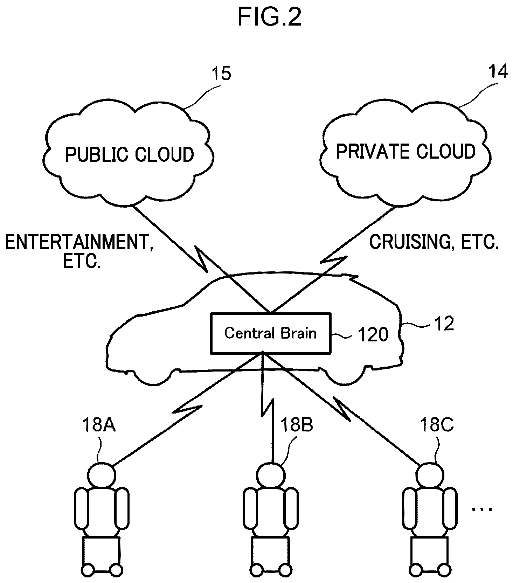

Fig. 2 is a diagram for explaining a communication environment to which the central brain 120 according to the present embodiment is connected. As illustrated in Fig. 2, the central brain 120 can switch between the private cloud 14 and the public cloud 15 as a communication destination. For example, the connection between the private cloud 14 and the central brain 120 is realized by the VPN which is a secure connection method. In addition, the central brain 120 is connected to the plurality of robots 18A, 18B, and 18C by the VPN. In addition, a battery (not shown) for operating the central brain 120 in the vehicle 12 is connected to the central brain 12. Note that the robot 18 is not limited to a humanoid robot as illustrated in Fig. 2, and may include an industrial robot driven at a construction site or a factory.

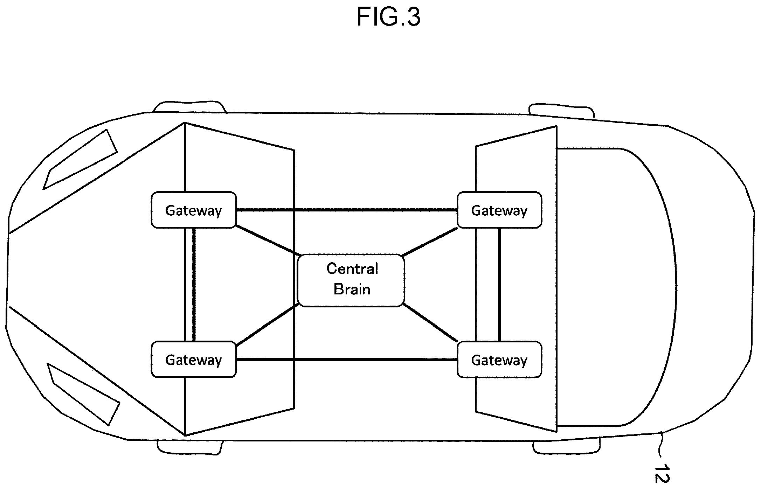

Fig. 3 is a diagram for explaining a configuration of the central brain 120 in the vehicle 12. As illustrated in Fig. 3, a plurality of gateways are communicably connected to the central brain 120. The central brain 120 is connected to external clouds via the gateways. The central brain 120 is configured to be able to access the external clouds via the gateways. On the other hand, the central brain 120 cannot be directly accessed from the outside due to the presence of the gateways.

The central brain 120 controls the vehicle and processes requests every billionth of a second. In addition, the central brain 120 processes requests from the plurality of robots 18A, 18B, and 18C. Note that the central brain 120 may be configured in a divided manner. In this case, for example, a central brain connected to the private cloud 14 and a central brain connected to the public cloud 15 may be separately configured.

Every time the central brain 120 receives data to be processed, the central brain 120 transmits a setting request to the information processing device 122 for inquiry, and receives the setting of the connection destination from the information processing device 122. The central brain 120 branches the connection destination of the data according to the setting of the connection destination, and connects the mission-critical data to the private cloud 14 and connects the non-mission-critical data to the public cloud 15.

Furthermore, as described above, it is not possible to enter the central brain 120 from the gateways, but conversely, it is possible to ask other questions from the central brain 120. The central brain 120 may make inquiries to the central brains of other vehicles.

The robot 18 is, for example, a robot capable of engaging in work in a dark kitchen of a fast food restaurant, cleaning up trash, or the like. One level 6 smart car, that is, one vehicle 12 including the central brain 120, can manage about 100 level 5 robots 18. The management of the plurality of robots 18 by the vehicle 12 makes it possible to take charge of most of the tasks performed by, for example, blue-color workers or gig workers. In this manner, the vehicle 12 including the central brain 120 enables group intelligent work.

In order for the robot 18 not to be exposed to the risk of hacking, the robot 18 is VPN-connected only to its level-6 manager, the central brain 120, via chip level security.

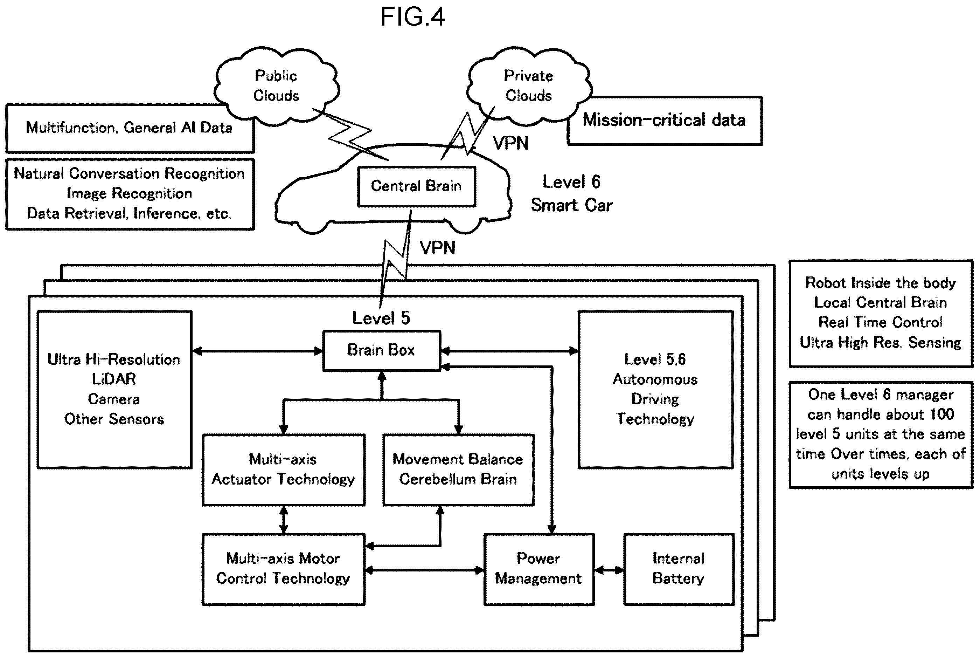

Fig. 4 is a schematic diagram illustrating the configuration of the robot 18 described above and a communication environment to which the robot 18 is connected.

The information processing device 122, which is a security chip, includes an acquisition unit 140, a determination unit 142, and a setting unit 144. Note that, in the information processing system 10, the central brain 120 and the information processing device 122 are separately configured, but the information processing device 122 may be incorporated in the central brain 120.

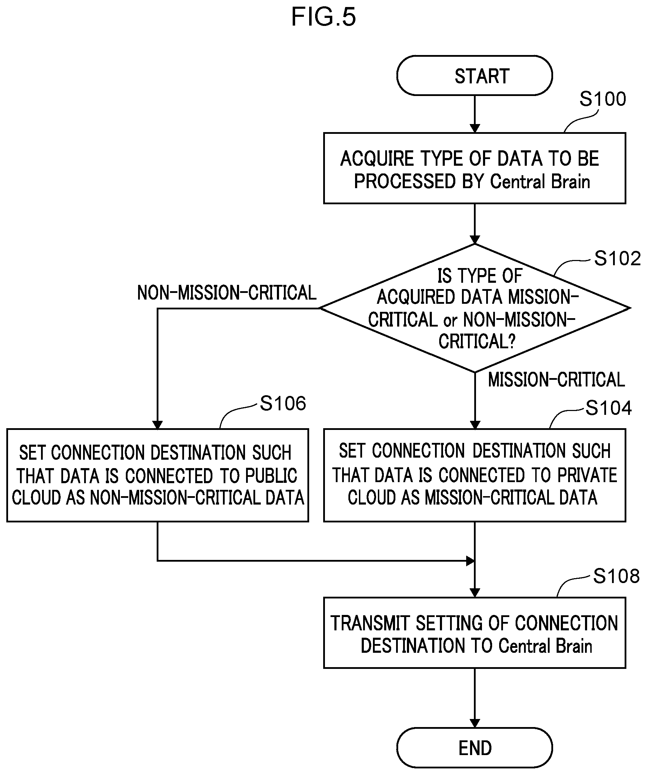

The information processing device 122 repeatedly executes a flowchart illustrated in Fig. 5. Every time the central brain 120 receives data to be processed, the information processing device 122 receives a processing request from the central brain 120 and performs a series of processes illustrated in the flowchart in one billionth of a second.

In step S100, the acquisition unit 140 acquires the type of data to be processed by the central brain 120.

In step S102, the determination unit 142 determines whether the type of the acquired data is mission-critical data or non-mission-critical data. When it is determined that the type of the acquired data is mission-critical data, the process proceeds to step S104, and when it is determined that the type of the acquired data is non-mission-critical data, the process proceeds to step S106.

In step S104, the setting unit 144 sets a connection destination such that the data to be processed by the central brain 120 is connected to the private cloud 14 as mission-critical data.

In step S106, the setting unit 144 sets a connection destination such that the data to be processed by the central brain 120 is connected to the public cloud 15 as non-mission-critical data.

In step S108, the setting unit 144 transmits the setting of the connection destination to the central brain 120. The connection destination of the data to be processed by the central brain 120 is allocated according to the setting of the connection destination. The mission-critical data is connected to the private cloud 14, and the non-mission-critical data is connected to the public cloud 15.

In this manner, the information processing system 10 enables safe autonomous driving by more securely protecting mission-critical data.

### (Second Embodiment)

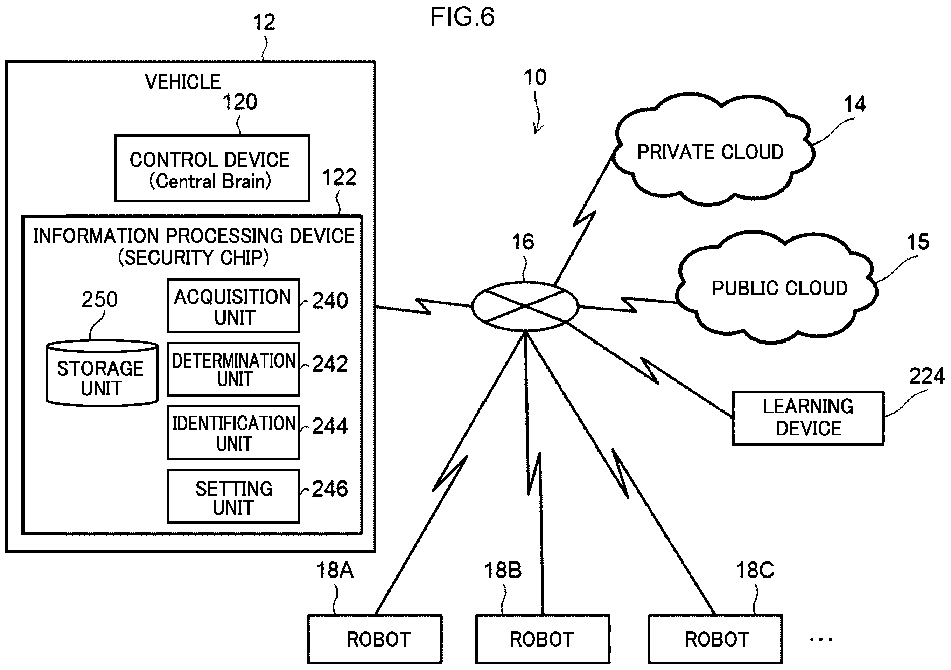

Next, a second embodiment of the disclosure will be described. Note that the same parts as those in the first embodiment will be denoted by the same reference numerals, and the description thereof will be omitted. Fig. 6 is a schematic diagram of an example of an information processing system 10 according to the second embodiment.

The information processing device 122 according to the second embodiment includes an acquisition unit 240, a determination unit 242, an identification unit 244, and a setting unit 246.

The acquisition unit 240 acquires data to be processed by the control device 120. The acquisition unit 240 acquires data transmitted from various sensors provided in, for example, the vehicle 12 and the robot 18. Note that the data acquired by the acquisition unit 240 may be the data itself or metadata capable of identifying the data itself.

The determination unit 242 determines whether the type of the data acquired by the acquisition unit 240 is mission-critical data or non-mission-critical data designated in advance by a user. In the present embodiment, it is assumed that mission-critical data and non-mission-critical data are designated by the user. Data related to the designation is stored in a storage unit 250 of the information processing device 122.

When the data is determined to be non-mission-critical data in the determination of the determination unit 242, the processing of the identification unit 244 is executed in a case in which the data is undefined data that is not defined in the designation. Using a trained identification model, the identification unit 244 identifies a degree to which the acquired data is mission-critical (hereinafter, also simply referred to as a degree). The trained identification model is a model for identifying a degree to which data is mission-critical, and is trained in advance.

The setting unit 246 sets the control device 120 such that mission-critical data is connected to a secure private cloud and non-mission-critical data is connected to a public cloud.

A learning device 224 learns an identification model for identifying a degree to which data is mission-critical, using a machine learning technique, with training data including undefined data and weight labels for the undefined data as inputs. The undefined data is data that is not defined as mission-critical data or non-mission-critical data in the designation of the user. The undefined data will be described in detail later. As a machine learning technique used in the learning device 224, any learning technique such as a deep neural network (DNN) capable of learning a model that outputs a degree to which data is mission-critical with the data as an input can be used.

Here, the mission-critical data and the non-mission-critical data defined by the designation of the user will be exemplified. The designation of the mission-critical data and the non-mission-critical data to be described below is defined by the user who is an administrator of the information processing system, and is stored in the storage unit 250 of the information processing device 122.

Types of data that can be sorted as mission-critical data are mainly classified into data necessary for autonomous driving itself and data with high urgency. In the information processing device 122, whether to treat data to be exemplified below as mission-critical data or non-mission-critical data can be designated in advance by the user. Then, the information processing device 122 determines whether the data is mission-critical data or non-mission-critical data according to the designation.

The data necessary for autonomous driving itself includes driving state-related sensor information and traveling environment-related sensor information of the vehicle 12, which are acquired from the various sensors provided in the vehicle 12. Examples of the driving state-related sensor information include vehicle speed information, wheel rotation speed information, yaw rate information, steering information, brake information, and the like. Examples of the traveling environment-related sensor information include information indicating that an obstacle or the like has been detected on a road, a road element, a road surface resistance, an air resistance, and the like. The road element is a general element related to a road on which the vehicle is traveling, and examples of the road element include a road width, a front vehicle, an oncoming vehicle, a speed limit, a traffic light, a sign, and the like. Furthermore, these elements of information may be determined depending on which sensor the information is transmitted from.

Examples of the data with high urgency include incident information that has occurred around the vehicle 12, an emergency notification transmitted from the robot 18, and the like, which are extracted from external data such as traffic information and weather information. The incident information is, for example, information about an accident, a disaster, bad weather, etc. that have occurred within a range of a predetermined distance from the current position of the vehicle 12. The emergency notification transmitted from the robot 18 is issued, for example, when a trouble occurs in controlling the robot 18 itself, when the robot 18 detects an occurrence of an incident with high urgency, or when an emergency call button provided on the robot 18 as a trigger is pressed. As an incident with high urgency that can be detected by the robot 18, for example, an occurrence of a demonstration activity in the area where the robot 18 is active, an inflow of a large number of people to the area where the robot 18 is active, a traffic accident in the area where the robot 18 is active, or the like can be detected. Note that although the traffic information or the weather information is given as an example of the data included in the external data, the data included in the external data is not limited thereto, and may include various information provided outside the information processing system 10. For example, information from city cameras, sensors installed in parking lots, and external monitoring systems may be appropriately included in and handled as external data.

The non-mission-critical data will be exemplified. The non-mission-critical data is natural conversation recognition, image recognition, information search, information inference, and other acquired information that is not classified as data with high urgency. The natural conversation recognition is, for example, speech in conversation detected by the vehicle 12 or the robot 18. The image recognition is a state inside the vehicle or a surrounding scene captured by a camera of the vehicle 12 or a surrounding scene captured by a camera of the robot 18, not a state or a scene the road on which the vehicle 12 is traveling. The information search is, for example, a search keyword input to an application or a navigation system provided in the vehicle 12. The information inference is a result of a calculation performed by an application installed on the vehicle 12 or an application of an external service. The other acquired information is external data other than the above-described data with high urgency and data from the robot 18.

The non-mission-critical data may include undefined data other than the data illustrated above. That is, the non-mission-critical data designated by the user includes data defined as non-mission-critical data and undefined data. The non-mission-critical data is designated in advance by the user, but it is difficult for an administrator to designate all of the data. Therefore, data not designated by the user is treated as undefined data. The undefined data is assumed to be, for example, the above-described external data or data from the robot 18, data from external services for which the information processing system 10 has newly started transmission and reception of data, data from applications newly introduced in the robot 18, and the like.

The undefined data is input to the trained identification model with information for identifying the undefined data being converted into a feature value. Similarly, learning is performed by the learning device 224 with the undefined data being converted as training data. The information identified as undefined data is information about the data itself and metadata. In a case in which the data is image data, the information about the data itself is image information such as an image size, a resolution, and object information in an analyzed image. In a case in which the data is audio data, the information about the data itself is a frequency or text data after conversion. In a case in which the data is sensor data, the information about the data itself is a detection value detected by the sensor. The metadata is information such as an acquisition date and time when the data is acquired, position information, and a source from which the data is transmitted.

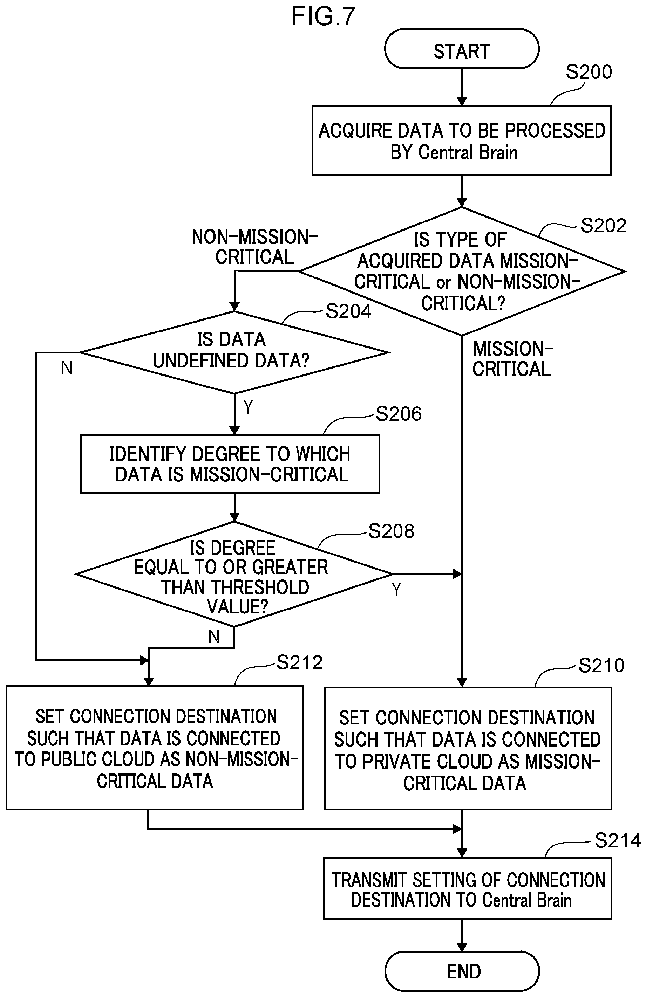

The information processing device 122 according to the second embodiment repeatedly executes a flowchart illustrated in Fig. 7. Every time the central brain 120 receives data to be processed, the information processing device 122 receives a processing request from the central brain 120 and performs a series of processes illustrated in the flowchart in one billionth of a second.

In step S200, the acquisition unit 240 acquires data to be processed by the central brain 120. Such data may be mission-critical data or non-mission-critical data. Note that the acquisition unit 240 extracts incident information for external data including traffic information or weather information, and extracts an emergency notification for data extracted from the robot 18.

In step S202, the determination unit 242 determines whether the type of the acquired data is mission-critical data or non-mission-critical data designated in advance by the user. Specifically, the determination unit 242 determines that data designated as mission-critical data by the user is mission-critical data according to data related to the designation in the storage unit 250. In addition, the determination unit 242 determines that data designated as non-mission-critical data by the user is non-mission-critical data. When it is determined that the type of the acquired data is mission-critical data, the process proceeds to step S210, and when it is determined that the type of the acquired data is non-mission-critical data, the process proceeds to step S204.

In step S204, the identification unit 244 determines whether the acquired data is undefined data. When the acquired data is undefined data, the process proceeds to step S206, and when the acquired data is not undefined data, the process proceeds to step S212.

In step S206, the identification unit 244 identifies a degree to which the acquired data is mission-critical, using a trained identification model in the storage unit 250.

In step S208, the identification unit 244 determines whether the identified degree to which the data is mission-critical is equal to or greater than a predetermined threshold value. When the value of the degree is equal to or greater than the threshold value, the process proceeds to step S2110, and when the value of the degree is not equal to or greater than the threshold value, the process proceeds to step S212. Note that, when the value of the degree is equal to or greater than the threshold value, the process is not limited to proceeding to step S210 and treating the data as mission-critical data. For example, after the process temporarily proceeds to step S212 and the data is set as non-mission-critical data, the administrator may be notified that the value of the degree is equal to or greater than the threshold value, and the determination result from the administrator may be received and the data may be reset.

In step S210, the setting unit 246 sets a connection destination such that the data to be processed by the central brain 120 is connected to the private cloud 14 as mission-critical data.

In step S212, the setting unit 246 sets a connection destination such that the data to be processed by the central brain 120 is connected to the public cloud 15 as non-mission-critical data.

In step S214, the setting unit 246 transmits the setting of the connection destination to the central brain 120. The connection destination of the data to be processed by the central brain 120 is allocated according to the setting of the connection destination. The mission-critical data is connected to the private cloud 14, and the non-mission-critical data is connected to the public cloud 15.

In addition, before the determination in step S204, a step of determining whether an identification request tag is added to the data may be added. The identification request tag is a tag indicating a target of identification determined in advance in the information processing system 10. In this case, when the identification request tag is added to the data, the process may proceed to step S204, and when the identification request tag is not added, the process may proceed to step S212. As a result, a degree to which data is mission-critical is identified only for the data to which the identification request tag is added.

In this manner, the information processing system 10 enables safe autonomous driving by more securely protecting mission-critical data.

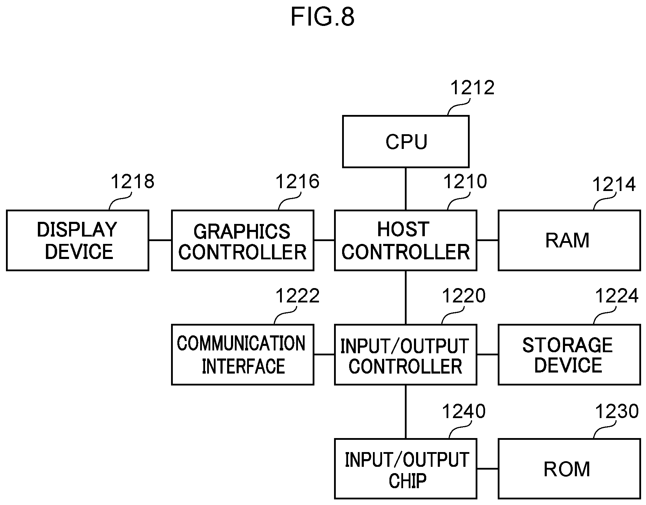

Fig. 8 schematically illustrates an example of a hardware configuration of a computer 1200 that functions as the control device 120 (central brain 120), the information processing device 122, or the plurality of robots 18A, 18B, and 18C. Programs installed in the computer 1200 can cause the computer 1200 to function as one or more "units" of the device according to the present embodiment, or cause the computer 1200 to execute operations associated with the device according to the present embodiment or one or more "units" of the device according to the present embodiment, and/or cause the computer 1200 to execute a process according to the present embodiment or stages of the process. Such programs may be executed by a CPU 1212 to cause the computer 1200 to execute specific operations associated with some or all of the blocks in the flowcharts and block diagrams illustrated herein.

The computer 1200 according to the present embodiment includes a CPU 1212, a RAM 1214, and a graphics controller 1216, which are connected to each other by a host controller 1210. The computer 1200 also includes a communication interface 1222, a storage device 1224, and an input/output unit such as a DVD drive or an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and a legacy input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 in a frame buffer or the like provided in the RAM 1214 or in the RAM 1214 itself, and causes the image data to be displayed on a display device 1218.

The communication interface 1222 communicates with other electronic devices via a network. The storage device 1224 stores programs and data used by the CPU 1212 in the computer 1200. The DVD drive reads programs or data from the DVD-ROM or the like and provides the programs or data to the storage device 1224. The IC card drive reads programs and data from the IC card and/or writes programs and data to the IC card.

The ROM 1230 stores therein a boot program or the like executed by the computer 1200 when activated, and/or programs dependent on the hardware of the computer 1200. The input/output chip 1240 may also connect various input/output units to the input/output controller 1220 via a USB port, a parallel port, a serial port, a keyboard port, a mouse port, and the like.

Programs are provided by a computer-readable storage medium such as a DVD-ROM or an IC card. The programs are read from the computer-readable storage medium, installed in the storage device 1224, the RAM 1214, or the ROM 1230, which is also an example of the computer-readable storage medium, and executed by the CPU 1212. The information processing described in these programs is read by the computer 1200 and brings about cooperation between the programs and the various types of hardware resources described above. The device or method may be configured by implementing the operation or processing of information according to the use of the computer 1200.

For example, when communication is performed between the computer 1200 and an external device, the CPU 1212 may execute a communication program loaded into the RAM 1214 and instruct the communication interface 1222 to perform communication processing based on the processing described in the communication program. Under the control of the CPU 1212, the communication interface 1222 reads transmission data stored in a transmission buffer area provided in the recording medium such as the RAM 1214, the storage device 1224, the DVD-ROM, or the IC card, and transmits the read transmission data to the network, or writes reception data received from the network to a reception buffer area or the like provided on the recording medium.

In addition, the RAM 1214 may read all or necessary portions of files or databases stored in the external recording medium such as the storage device 1224, the DVD drive (DVD-ROM), or the IC card, and the CPU 1212 may execute various types of processing on data on the RAM 1214. Next, the CPU 1212 may write back the processed data to the external recording medium.

Various types of information such as various types of programs, data, tables, and databases may be stored in the recording medium and subjected to information processing. The CPU 1212 may execute various types of processing on the data read from the RAM 1214, the various types of processing including various types of operations, information processing, conditional determination, conditional branching, unconditional branching, information search/replacement, and the like, which are described throughout the disclosure and specified by an instruction sequence of a program, and writes back the results to the RAM 1214. In addition, the CPU 1212 may search for information in files, databases, or the like in the recording medium. For example, in a case in which a plurality of entries, each having an attribute value of a first attribute associated with an attribute value of a second attribute, are stored in the recording medium, the CPU 1212 may search for an entry of which the attribute value of the first attribute matches the specified condition from among the plurality of entries, and read the attribute value of the second attribute stored in the entry, thereby acquiring the attribute value of the second attribute associated with the first attribute satisfying the predetermined condition.

The programs or software modules described above may be stored in the computer-readable storage medium on the computer 1200 or near the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the present embodiment may represent stages of a process in which operations are performed or "units" of a device that serves to perform operations. Specific stages and "units" may be implemented by dedicated circuits, programmable circuits provided with computer-readable instructions stored on the computer-readable storage medium, and/or processors provided with computer-readable instructions stored on the computer-readable storage medium. The dedicated circuits may include digital and/or analog hardware circuits, and may include integrated circuits (ICs) and/or discrete circuits. The programmable circuits may include reconfigurable hardware circuits including a logical AND, a logical OR, a logical XOR, a logical NAND, a logical NOR, and other logical operations, flip-flops, registers, and memory elements, such as field programmable gate arrays (FPGAs) and programmable logic arrays (PLAs).

The computer-readable storage medium may include any type of tangible device capable of storing instructions to be executed by a suitable device. As a result, the computer-readable storage medium having instructions stored thereon includes a product having instructions that may be executed to create a means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instructions may include assembler instructions, instruction-set-architecture (ISA) instructions, machine instructions, machine dependent instructions, microcode, firmware instructions, state-setting data, or either source code or object code written in any combination of one or more programming languages including object-oriented programming languages such as Smalltalk (registered trademark), JAVA (registered trademark), and C++, and conventional procedural programming languages such as a "C" programming language or similar programming languages.

The computer-readable instructions may be provided for a processor or a programmable circuit of a general purpose computer, a special purpose computer, or another programmable data processing device, either locally or through a local area network (LAN) or a wide area network (WAN) such as the Internet, such that the processor or programmable circuit of the general purpose computer, the special purpose computer, or another programmable data processing device executes the computer-readable instructions to create a means for performing the operations specified in the flowcharts or block diagrams. Examples of the processor include a computer processor, a processing unit, a microprocessor, a digital signal processor, a controller, a microcontroller, and the like.

While the disclosure has been described using the embodiments, the technical scope of the disclosure is not limited to the above-described embodiments. It is apparent to those skilled in the art that various modifications or improvements can be made to the above-described embodiments. It is also apparent from the claims that modes to which such modifications or improvements are added can also fall within the technical scope of the disclosure.

It should be noted that the operations, procedures, steps, and stages in each process performed in the device, system, program, and method shown in the claims, the specification, and the drawings may be implemented in any order unless the order is not specifically defined by using term "prior to", "before", or the like, and unless the output of previous processing is used in later processing. Even if the operation flow in the claims, the specification, and the drawings is described using the terms "first,", "next,", and the like for convenience, this does not mean that it is essential to perform the operation flow in this order.

The disclosure of Japanese Patent Application No. 2022-166554 filed on October 17, 2022 and Japanese Patent Application No. 2022-184421 filed on November 17, 2022 are incorporated herein by reference in their entirety. All the documents, patent applications, and technical standards described in this specification are incorporated herein by reference to the same extent as if each document, patent application, and technical standard were specifically and individually indicated to be incorporated by reference.

### Description of Reference Numerals

- 10: Information processing system
- 120: Control device
- 122: Information processing device
- 224: Learning device
- 14: Private cloud
- 15: Public Cloud, Robot 18(18A, 18B, 18C)
- 1200: Computer
- 1210: Host controller
- 1212: CPU
- 1214: RAM
- 1216: Graphics controller
- 1218: Display device
- 1220: Input/output controller
- 1222: Communication interface
- 1224: Storage device
- 1230: ROM
- 1240: Input/output chip

## Claims

1. An information processing system comprising:
a control device that is a central brain mounted on a vehicle, and an information processing device,
wherein the information processing device includes:
an acquisition unit that acquires a type of data to be processed by the control device;
a determination unit that determines whether the type of the acquired data is mission-critical data or non-mission-critical data; and
a setting unit that sets the control device to connect the mission-critical data to a secure private cloud and connect the non-mission-critical data to a public cloud.

2. The information processing system according to claim 1, further comprising:
a plurality of robots,
wherein the private cloud and the control device, and the robot and the control device are connected by a secure connection method.

3. An information processing device in an information processing system including a control device that is a central brain mounted on a vehicle and the information processing device, the information processing device comprising:
an acquisition unit that acquires a type of data to be processed by the control device;
a determination unit that determines whether the type of the acquired data is mission-critical data or non-mission-critical data; and
a setting unit that sets the control device to connect the mission-critical data to a secure private cloud and connect the non-mission-critical data to a public cloud.

4. A program for causing a computer to function as the information processing device according to claim 3.

5. An information processing system comprising:
a control device that is a central brain mounted on a vehicle, and an information processing device,
wherein the information processing device includes:
an acquisition unit that acquires data to be processed by the control device;
a determination unit that determines whether a type of the acquired data is mission-critical data or non-mission-critical data designated in advance by a user;
an identification unit that identifies a degree to which the acquired data is mission-critical by using an identification model trained for identifying a degree to which data is mission-critical, when it is determined that the acquired data is non-mission-critical data in the determination and the acquired data is undefined data that is not defined in the designation; and
a setting unit that sets the control device to connect the mission-critical data to a secure private cloud and connect the non-mission-critical data to a public cloud.

6. The information processing system according to claim 5, wherein the setting unit sets the acquired data that is undefined data to be connected to the private cloud as the mission-critical data according to the identified degree.

7. The information processing system according to claim 5, wherein
an identification request tag is added to the undefined data, and
the identification unit identifies the degree only when the data to which the identification request tag is added is acquired.

8. The information processing system according to claim 5, wherein
in the designation, data necessary for autonomous driving of the vehicle and predetermined data with high urgency are defined as types of data to be determined as the mission-critical data, and natural conversation recognition, image recognition, information search, information inference, and other acquisition information that is not classified as the data with high urgency are defined as types of data to be determined as the non-mission-critical data,
the data necessary for the autonomous driving of the vehicle includes driving state-related sensor information and traveling environment-related sensor information necessary for the autonomous driving of the vehicle, and
the data with high urgency includes incident information that has occurred around the vehicle and a predetermined emergency notification.

9. The information processing system according to claim 5, further comprising:
a learning device configured to learn the trained identification model,
wherein the learning device learns an identification model for identifying a degree to which data is mission-critical by using a machine learning technique with training data as an input, the training data including the mission-critical data and the non-mission-critical data designated by the user, undefined data that are not defined in the non-mission-critical data, and weight labels for the undefined data.

10. An information processing device in an information processing system including a control device that is a central brain mounted on a vehicle and the information processing device, the information processing device comprising:
an acquisition unit that acquires data to be processed by the control device;
a determination unit that determines whether a type of the acquired data is mission-critical data or non-mission-critical data designated in advance by a user;
an identification unit that identifies a degree to which the acquired data is mission-critical by using an identification model trained for identifying a degree to which data is mission-critical, when it is determined that the acquired data is non-mission-critical data in the determination and the acquired data is undefined data that is not defined in the designation; and
a setting unit that sets the control device to connect the mission-critical data to a secure private cloud and connect the non-mission-critical data to a public cloud.

11. A program for causing a computer to function as the information processing device according to claim 10.
